(19) Europäisches Patentamt
European Patent Office
Office européen des brevets

(11) Veröffentlichungsnummer: **0 222 298 B1**

(12) **EUROPÄISCHE PATENTSCHRIFT**

(45) Veröffentlichungstag der Patentschrift: **08.05.91**

(51) Int. Cl.$^5$: **C09K 21/14**, E04B 1/94, C08L 63/00, C08K 3/00

(21) Anmeldenummer: **86115245.2**

(22) Anmeldetag: **04.11.86**

# (54) Füllstoffhaltige Intumeszenzmassen auf Epoxidharzbasis.

(30) Priorität: **15.11.85 DE 3540524**

(43) Veröffentlichungstag der Anmeldung:
**20.05.87 Patentblatt 87/21**

(45) Bekanntmachung des Hinweises auf die Patenterteilung:
**08.05.91 Patentblatt 91/19**

(84) Benannte Vertragsstaaten:
**AT BE DE FR GB IT NL**

(56) Entgegenhaltungen:
**EP-A- 0 061 024**
**EP-A- 0 217 080**
**DE-A- 3 302 417**

(73) Patentinhaber: **BAYER AG**

**W-5090 Leverkusen 1 Bayerwerk(DE)**

(72) Erfinder: **von Bonin, Wulf, Dr.**
**Mendelssohnstrasse 30**
**W-5090 Leverkusen(DE)**

EP 0 222 298 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, z.B. aus der DE-OS 3 303 702, Intumeszenzwerkstoffe für den vorbeugenden Brandschutz zu erhalten, indem man Polyepoxide mit phosphorhaltigen und gegebenenfalls Hydroxygruppen tragenden und gegebenenfalls als Treibmittel wirkenden Zusätzen gegebenenfalls in Gegenwart von Cyanursäureabkömmlingen und nach Bedarf mit Füllstoffen mit Epoxidharzhärtern des Standes der Technik umsetzt.

Ein für Brandschutzzwecke wegen der zwischen 150 und 400 °C erfolgenden Wasserabspaltung besonders geeigneter Füllstoff ist das Aluminiumoxid-Hydrat bzw. Aluminiumhydroxid, das auch in Formulierungen anders aufgebauter Polymermaterialien Verwendung findet.

Aluminiumhydroxide werden auch in Kautschukmischungen als flammhemmende Füllstoffe eingesetzt.

Es wurde jetzt gefunden, daß Intumeszenzwerkstoffe, erhalten durch Umsetzung von Polyepoxiden mit bekannten Epoxidharzhärtern, insbesondere sogenannten kalthärtenden Epoxidharzsystemen auf Basis von Polyepoxiden und Polyaminen bei Verwendung von z.B. Aluminiumhydroxid-Füllstoffen als Zusatzstoff nur dann brauchbare Intumeszenzeigenschaften beibehalten, wenn der Füllstoff über 5 $\mu$m (D50) liegende mittlere Korngrößen und eine BET-Oberfläche von weniger als ca. 50 $m^2/g$ aufweist. Die BET-Methode zur Messung innerer Oberfläche (z.B. nach Brunauer, Emmet oder Teller) ist bekannt und beruht auf der Adsorption von Inertgasen auf diesen Oberflächen. Diese Beobachtung bezieht sich auch auf sämtliche anderen Füllstoffe, insbesondere auf die Al-Hydroxide. Das bedeutet, daß nur dann nach dem vorgenannten Verfahren brauchbar intumeszierende massive oder poröse, mit Al-Hydroxid gefüllte Epoxidharzmaterialien für den vorbeugenden Brandschutz erhalten werden, wenn der für Brandschutz bekannte Füllstoff Aluminiumhydroxid im oberen genannten Korngrößenbereich verwendet wird.

Die Verwendung von Füllstoffen in solchen Intumeszenzmaterialien ist immer dann erwünscht, wenn die bei Beflammung gebildeten Intumeszenzschäume gute Stabilität gegen Flammenerosion besitzen und keramisierbar sein sollen. Eine besonders gute Keramisierungsneigung wird immer dann beobachtet, wenn neben Al-Hydraxiden als Füllstoff Glas, Alkali- und Erdalkalisilikate, z.B. von Na, K, Ca Zn oder Borate und Phosphate bzw. Polyphosphat, Melaminphosphat oder -pyrophosphat, Borax oder Zinkborat, bzw. Oxide wie MgO, $Al_2O_3$; $Fe_2O_3$, und insbesondere $CaCO_3$, Dolomit, in Mengen von 1 - 100 Gew.-%, vorzugsweise 5 - 50 %, bezogen auf Al-Hydroxid mitverwendet werden. Natürlich sind statt des Al-Hydroxids auch andere, insbesondere bei Beflammung Wasser abgebende Füllstoffe, wie sie in der folgenden Aufzählung beispielhaft genannt sind, in Betracht zu ziehen:

$B(OH)_3$
$CaO.Al_2O_3.10\ H_2O$
Nesquehonit
$MgCO_3.H_2O$ Wermlandit
$Ca_2Mg_14(Al, Fe)_4CO_3(CO_3(OH)_42.29\ H_2$ =
Thaumasit
$Ca_3Si(OH)_6(SO_4)\ (CO_3)12.H_2O$
Artinit
$Mg_2(OH)_2CO_3,3\ H_0$ Ettringit
3 $(CaO.Al_2O_3\ CaSO_4.32\ H_2O$
Hydromagnasit
$Mg_5(OH)_2(CO_3)_4.4H_2O$
Hydrocalumit
$Ca_4Al_2(OH)_14.6\ H_2O$
Hydrotalkit
$Mg_6Al_2(OH)_16CO_3.4\ H_2O$
Alumohydrocalcit
$CaAl_2(OH)_4\ 8CO_3)_2.3\ H_2O$
Scarbroit
$Al_14(CO_3)_{36}$
Hydrogranat
3 CuO, $Al_2O_3.6\ H_2O$
Dawsonit
NaAl $(OH)CO_3$
Gips, $CaSO_4.2\ H_2O$, weiterhin
wasserhaltige Zeolithe, Vermikulite, Perlite, Glimmer, Alkalisilikate, Borsäure, Borax, modifizierte Graphite, Kieselsäuren, hydratisierte Gips-Zementgemische sowie Zemente.

Aufgrund der guten Zugänglichkeit und der guten Neutralisationsfähigkeit sowie Beständigkeit wird dem Aluminiumhydroxid jedoch den Vorzug gegeben.

Für alle diese Füllstoffe gilt der obige Befund der Abhängigkeit der Intumeszenzfähigkeit von deren Korngröße.

Das bedeutet, daß die Intumeszenzfähigkeit der Intumeszenzwerkstoff durch die Korngröße der in ihnen enthaltenen Füllstoffe bzw. Füllstoffgemische überraschenderweise steuernd beeinflußt werden kann.

Gegenstand der Erfindung sind somit bei Temperaturen über 100 °C Wasser abspaltende Füllstoffe enthaltende, massive oder poröse Intumeszenzmassen und Konstruktionselemente, erhalten durch Formgebung und Aushärtung von bekannten Epoxidharzsystemen, insbesondere mit Polyaminen gehärteten kalthärtenden Epoxidharzsystemen, die neben Phosphorsäurespendern gegebenenfalls Cyanursäureabkömmlinge und/oder sonstige Zusatzstoffe enthalten, dadurch gekennzeichnet, daß als Wasser abspaltende Füllstoffe solche verwendet werden, die mittlere Korngrößen über 5 µm besitzen, vorzugsweise 8 -50 µm, und/oder BET-Oberflächen von weniger als 5 $m^2$/g, vorzugsweise 2 - 0,1 $m^2$/g aufweisen.

Die erfindungsgemäßen Intumeszenzwerkstoffe enthalten in der Regel zwischen 0,3 und 85 Gew.-%, vorzugsweise 5 bis 60 Gew.-% der Füllstoffe, vorzugsweise Al-Hydroxid der genannten Körngrößen in Mengen von 5 bis 60 Gew.-%.

Erfindungsgemäß ist bevorzugt, daß die Intumeszenzmassen neben Al-Hydroxid der genannten Korngrößen weitere Füllstoffe auf Carbonatbasis in einer Menge von 0 - 50, vorzugsweise 5 - 30 Gew.-% bei einer Füllstoffgesamtmenge von 0,3 - 85 Gew.-% enthalten.

Vorzugsweise wird ohne Mitverwendung von Lösungs-, Dispersions-oder Verdünnungsmitteln gearbeitet.

Die Erfindung betrifft auch die Verwendung der Intumeszenzmassen zur Herstellung von Beschichtungen und Konstruktionselemente für den vorbeugenden Brandschutz.

Intumeszenzmassen sind bekanntlich Materialien, die bei Einwirkung von Feuer und Hitze aufschäumen und dabei einen isolierenden und feuerabweisenden Schaum ausbilden, der die rückwärtigen Bezirke vor der Feuereinwirkung schützt (DE-OS 30 41 731).

Als Beschichtungen und Konstruktionselemente mit Intumeszenzwirkung für den vorbeugenden Brandschutz werden solche Beschichtungen und Konstruktionselemente verstanden, deren Brandschutzwirkung darin besteht, daß sie im Brandfalle durch die Erhitzung unter Ausbildung eines feuerabweisenden und isolierenden Schaumes expandieren, dadurch im Brandfalle oftmals auftretende Verwerfungen, Ritzen und Fugen, Spalte usw. gegen den Durchtritt von Rauch und Flammen, bzw. Flammengasen verschließen und die rückwärtigen, dem Feuer abgewandten Teile gegen den Zugriff des Feuers abschirmen.

Als Konstruktionselemente werden hier beispielsweise bezeichnet: Wandverkleidungen, Behälterabdekkungen, Platten, Wandelemente, Sicherheitsgehäuse, in Fugen eingebaute oder in sie eingelegte oder eingedrückte Profile; Dichtungselemente, Halbzeuge und Formteile für spezielle geometrisch fallweise verschiedenartige Ausformungen von Sicherungsvorrichtungen, Sandwiches, bzw. einzelne Bestandteile von Verbundwerkstoffen in Plattenform, Pfropfen, Verschlußelemente, Kabeltrassen.

Vorzugsweise handelt es sich um Konstruktionselemente aus mehr oder weniger harten, selbsttragenden oder verstärkten Intumeszenzwerkstoffen, die massiven, porösen oder schaumstoffartigen Charakter haben können.

Mit erfindungsgemäßen Intumeszenzmassen hergestellte Beschichtungen können ebenfalls massiven oder porigen Charakter haben und auf verschiedenste Substrate, etwa Holz, Stahl, Glas, Keramik, Mauerwerk, Textilien, Kunststoffe aufgebracht sein oder auch als Vergußmassen Verwendung finden.

Die bisher zur Herstellung solcher Beschichtungen und Konstruktionselemente evtl. geeigneten harten Intumeszenzmaterialien haben oft den Nachteil der mangelden Beständigkeit gegen Flammenerosion.

Bei den konventionellen intumeszierenden Werkstoffen handelte es sich um Mischungen von mehreren Komponenten, z.B. um einen zumeist phosphorhaltigen Säurespender, um ein die Ausbildung des Schaumes bewirkendes, bzw. verbesserendes Carbonific, zumeist einen Polyalkohol und um ein Treibmittel, zumeist ein Ammoniumsalz oder auch sonstige Stickstoff enthaltende Verbindungen.

Gemische dieser Komponenten, gegebenenfalls mit weiteren Hilfsmitteln, werden, als Pulvermischungen granuliert oder mit Bindemitteln versehen, bisher als Intumeszenzmassen eingesetzt. Auch Alkalisilikate mit bei Beflammung verdampfenden Wasseranteilen wurden für diesen Zweck benutzt, d.h. als Intumeszenzmassen für den vorbeugenden Brandschutz eingesetzt.

Außer einigen Nitroaromaten, die unerwünschte Eigenschaften haben, sind die bekannten Intumeszenzmassen der Praxis bei zufriedenstellender Wirksamkeit teilweise hygroskopisch, teilweise luftempfindlich und wasserempfindlich. Daher sind sie selbst dann, wenn sie mit relativ wasserbeständigen Bindemitteln zusammen verarbeitet werden, nicht wasserbeständig und können nur da zum Einsatz gelangen, wo kein Regen oder fließendes Wasser auftreten kann. Oftmals muß sogar ein Schutz gegen Luft-und Luftfeuchtigkeitszutritt vorgenommen werden.

Andererseits besteht im Schiffbau, Fahrzeugbau, Hochbau, Tiefbau und im Bereich der Elektrotechnik ein erheblicher Bedarf an wasserbeständigen Intumeszenzmassen.

Diesem Bedürfnis entsprachen Konstruktionselemente, die z.B. gemäß DE-OS 33 02 416 aus wasserfestem Intumeszenzmaterial hergestellt werden konnten.

Da diese und auch andere Intumeszenzmaterialien jedoch noch Wünsche im Hinblick auf die Beständigkeit gegen die bei starken Bränden auftretende erhebliche Flammenerosion des Intumeszenzschaumes offen ließen, war es erforderlich, hier nach verbesserten Lösungen zu suchen, wie sie durch die vorliegende Erfindung ermöglicht werden.

Die erfindungsgemäßen, gegebenenfalls hoch füllstoffhaltigen Intumeszenzmassen können so hergestellt werden, daß im Brandfalle ein durch die keramisierbaren Füllstoffe, bzw. Füllstoffgemische gegen das mechanische und oxidative Abtragen des Intumeszenzschaumes durch die Flamme (Flammenerosion) stabilisierter isolierender und flammenabweisender Intumeszenzschaum gebildet wird. Hierzu ist es jedoch erfindungsgemäß erforderlich, die über 100 °C Wasser abgebenden Füllstoffe in ausreichender, über ca. 15 Gew.-% liegenden Mengen und im geeigneten Korngrößenbereich einzusetzen, da überraschenderweise ein Unterschreiten der vorgenannten Korngrößenbereiche die Ausbildung des Intumeszenzschaumes hemmt bzw. unterbindet.

Für die erfindungsgemäßen Intumeszenzmassen kommen neben den vorgenannten und gekennzeichneten wasserabspaltenden Füllstoffen, insbesondere Aluminiumhydroxid (-Oxidhydrat) mit Korngrößen über 5 µm, und die bekannten, vorzugsweise halogenfreien Polyepoxide mit mehr als einer 1,2-Epoxidgruppe in Frage (Komponente 1):

Das sind unter anderem Polyglycidylether mehrwertiger Phenole, hergestellt beispielsweise aus Brenzkatechin, Resorcin, Hydrochin, 4,4'-Dihydroxydiphenylmethan, 4,4'-Dihydroxy-3,3'-dimethyldiphenylmethan, 4,4'-Dihydroxydiphenyldimethylmethan (Bisphenol A), 4,4'-Dihydroxydiphenylmethan, 4,4'-Dihydroxydiphenylcyclohexan, 4,4'-Dihydroxy-3,3'-dimethyldiphenylpropan, 4,4'-Dihydroxydiphenyl, 4,4'-Dihydroxydiphenylsulfon, Tris-(4-hydroyphenyl)-methan, aus Novolacken (d.h. aus Umsetzungsprodukten von ein- oder mehrwertigen Phenolen mit Aldehyden, insbesondere Formaldehyd, in Gegenwart saurer Katalysatoren), Diphenolen, die durch Veresterung von 2 Mol des Natriumsalzes einer aromatischen Oxycarbonsäure mit einem Mol eines Dihalogenalkans oder Dihalogendialkylethers enthalten wurden (vgl. britische Patentschrift 1 017 612), aus Polyphenolen, die durch Kondensation von Phenolen und langkettigen, mindestens 2 Halogenatome enthaltenden Halogenparaffinen erhalten wurden (vgl. britische Patentschrift 1 024 288).

Weiter seien genannt: Glycidylether mehrwertiger Alkohole, beispielsweise aus 1,4-Butandiol, 1,4-Butendiol, Glycerin, Trimethylolpropan, Pentaerythrit und Polyethylenglykolen.

Außerdem kommen in Frage: Glycidylester mehrwertiger aromatischer, aliphatischer und cycloaliphatischer Carbonsäuren, beispielsweise Phthalsäurediglydicylester, Terephthalsäurediglycidylester, Tetrahydrophthalsäurediglycidylester, Adipinsäure-diglycidylester, Hexahydrophthalsäurediglycidylester, die gegebenenfalls durch Methylgruppen substituiert sein können, und Glycidylester von Umsetzungsprodukten aus 1 Mol eines aromtischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel

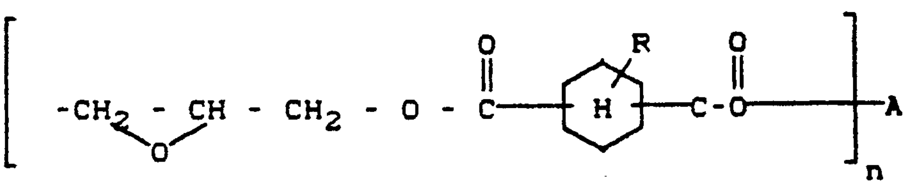

worin A einen mindestens 2-wertigen Rest eines gegebenenfalls durch Sauerstoff und/oder cycloaliphatische Ringe unterbrochenen, aliphatischen Kohlenwasserstoffs oder den 2-wertigen Rest eines cycloaliphatischen Kohlenwasserstoffs, R Wasserstoff oder einen Alkylrest mit 1-3 C-Atomen und n eine Zahl zwischen 2 bis 6 bedeuten, oder Mischungen von Glycidylcarbonsäureestern der angegebenen allgemeinen Formel (vgl. GB-PS 1 220 702).

Besonders bevorzugt werden neben Polyepoxiden auf Basis Bisphenol A: 1,2-Polyepoxide mit mindestens einem tertiären Stickstoffatom pro Molekül, z.B. Bis-(N-epoxypropyl)-anilin, N,N'-Bis-glycidyl-diaminodiphenylmethan in Form der verschiedenen Stellungsisomeren, Bis-(N-epoxypropyl)-butylamin, Bis-(N-epoxypropyl)-4-amino-phenylglycidylether, Triglycidylisocyanurat, N,N'-Diepoxypropyloxamid, Triglycidyl-1,2,4-triazolidin-3,5-dione (z.B. DE-OS 2 935 354), Glycidyl-1,2,4-triazolindin-3,5-dione mit 2 bis 10 Glycidylgruppen (z.B. DE-OS 3 027 623), N,N'-Diglycidyl-bis-hydantoinyl-Verbindungen (z.B. DE-AS 1 670 490),

N,N'-Diglycidylverbindungen von cyclischen Ureiden (z.B. GB-PS 1 148 570, DE-PS 2 263 492, DE-AS 1 954 503), Polyurethandiglycidylether (z.B. US-PS 2 830 038, DE-OS 1 947 001, DE-AS 1 966 182), Imidgruppen enthaltende Diglycidylester (z.B. DE-AS 2 306 403).

Die vorstehenden 1,2-Polyepoxide mit mindestens einem tertiären Stickstoffatom pro Molekül können mit stickstoffreien 1,2-Polyepoxiden, insbesondere mit Polycidylethern mehrwertiger Phenole z.B. des Bisphenol A, abgemischt werden. Bevorzugte lösungsmittelfreie Intumeszenzmassen enthalten als Komponent 1) 10 - 100 Gew.-% eines 1,2-Polyepoxids mit mindenstens einem tertiären Stickstoffatom pro Molekül und 0 - 90 Gew.-% eines stickstofffreien 1,2-Polyepoxids.

Die 1,2-Polyepoxide, insbesondere feste 1,2-Polyepoxide, können zur Viskositätserniedrigung auch mit flüsssigen Monoepoxiden wie Phenylglycidylether, tert.-Butylphenylglycidylether, Allylglycidylether u.a. abgemischt werden.

Als Komponente 2, d.h. als Härter für die Polyepoxide können übliche aliphatische und/oder cycloaliphatische Polyamine eingesetzt werden, beispielsweise Triethylentetramin, Pentaethylenhexamin, die Hydrierungsprodukte von Anlagerungsprodukten aus 1 Mol eines Glykols (wie 1,4-Butylenglykol) und 2 Mol Acrylnitril, 4,4'-Diamino-3,3'-dimethyl-dicyclohexylmethan, Mischungen der vorgenannten Polyamine oder Alkoxylierungsprodukte der vorgenannten Polyamine. Auch Polyamine auf Basis basischer Amine sind in Betracht zu ziehen. Pro Epoxidäquivalent werden vorzugsweise 0,8 bis 1,2 NH-Äquivalente des Polyamins eingesetzt.

Als Komponente 3 der erfindungsgemäßen Intumeszenzmassen werden Phosphorsäurespender bezeichnet, d.h. P-haltige Substanzen, die im Brandfalle zur Phosphorsäurebildung Anlaß geben und die Ausbildung des carbonisierten Intumeszenzschaumes begünstigen. Genannt seien beispielsweise Salze von P-haltigen Säuren insbesondere Aminsalze wie Ammoniumphosphate und -Polyphoshate, Ethylendiaminphosphate und Polyphosphate oder Melaminphosphat, -Pyrophosphat und -Polyphosphat, welche zu den bevorzugten Phosphorsäurespendern gehören. Es sind aber auch geeignet Phosphor-, Phosphon- und Phosphinsäuren und deren Salze, aber auch Ester, Amide und sonstige Abkömmlinge von Phosphorsäuren bzw. Phosphonsäuren, wie Diphenylkresylphosphat oder Dimethylmethylphosphonat oder P-haltige Additionsprodukte und Kondensationsprodukte sonstiger Art. Es können auch Gemische der P-haltigen Komponenten verwendet werden.

Bezogen auf 1,2-Polyepoxid ist der Phosphorsäurespender in Gewichtsmengen von 0,1 bis 60 %, vorzugsweise 10 bis 50 % in der Mischung der Intumeszenzmasse vorhanden.

Als Komponente 4, die gegebenenfalls in den Intumeszenzmassen vorhanden sein kann, können Cyanursäureabkömmlinge eingesetzt werden. Darunter werden hier verstanden, z.B.:

Cyanursäure, Cyanamid, Dicyanamid, Dicyandiamid, Guanidin und dessen Salze, Harnstoff, Hydrazodicarbonamid, Biguanid, Biuret, Allophanat, Urazol, Urazolcyanurat, Melamincyanurat, Melaminphosphat, Cyanursäuresalze und Cyanursäureester und -amide und insbesondere Melamin.

Unter Melamin wird vorzugsweise der Grundkörper 2,4,6-Triamino-s-Triamin verstanden.

Der Begriff Cyanursäureabkömmlinge schließt auch Aldehydkondensationsprodukte, vorzugsweise Formaldehydkondensationsprodukte der vorgenannten Verbindungen ein, die im Falle der Methylolverbindungen auch mit niederen Alkoholen ($C_1$-$C_4$) verethert sein können.

Bezogen auf das 1,2-Polyepoxid kann der Cyanursäure-Abkömmling, z.B. das Melamin, in Gewichtsmengen von 0,1 bis 40, vorzugsweise 1 bis 25 in der Intumeszenzmasse vorhanden sein.

Als sonstige Zusatzstoffe können in den erfindungsgemäßen Intumeszenzmassen auch Füllstoffe, vorzugsweise kugeliger oder nahezu kugeliger Form, insbesondere Füllstoffe aus Hohlperlen vorhanden sein.

Obwohl anorganische kugelförmige Füllstoffe wegen ihrer fehlenden Brennbarkeit bevorzugt werden, kommen auch kugel- oder hohlkugelförmige Füllstoffe aus organischem Material in Betracht, z.B. aus vernetztem oder unvernetztem Polystyrol oder Polyethylen, Phenolharz oder Polyvinylchlorid. Das Material, aus dem die kugelförmigen Teilchen bestehen, sollte wasserunlöslich sein.

Quarz- bzw. Kieselsäurekugeln, Glaskugeln, Flugaschekügelchen sowie vor allem Kugeln aus Alumosilikaten seien besonders erwähnt. Kugeln und Hohlkugeln dieser Art sind gut zugänglich. Die Teilchengröße kann bis zu 800 Mikron und mehr betragen: vorzugsweise werden Teilchengrößen zwischen 5 und 500 Mikron eingesetzt.

Die kugeligen Füllstoffteilchen können in Verbindungen mit nicht kugeligen Füllstoffen oder auch in Verbindung mit organischen oder anorganischen Fasern Verwendung finden.

Die kugelförmigen bzw. nahezu kugelförmigen Füllstoffe können in Mengen von 1 - 80, vorzugsweise 20 - 70 Gew.-%, bezogen auf die erfindungsgemäße Intumeszenzmasse, verwendet werden.

Obgleich die Mitverwendung von sonstigen Füllstoffen mit Korndurchmessern unter 5 $\mu$m (D 50) wie Glas-, Kohle- oder Mineralfasern, Kreide, Gesteinsmehl, Dolomit, Talkum, Perlit, Vermikulit, Asbest, Kaolin,

Kieselsäure, Ton, Kohlenstoff, Magnesiumoxid, Aluminiumoxide, Eisenoxide zur Verminderung des Aufschäumens führt, ist deren Mitverwendung durchaus in Betracht zu ziehen, vor allem dort, wo vermindertes Aufschäumen in Kauf genommen werden kann.

Von besonderem Interesse sind auch Zusatzstoffe organischer oder anorganischer Natur, die die Rhelogie der Intumeszenzmassen vor der Aushärtung beeinflussen, z.B. in dem sie eine Tixotropie bewirken, die Dickschicht-Aufträge möglich macht. Solche Zusatzstoffe sind z.B. Polyamide, Polyharnstoffe, Bentonite, nadelförmig-kristalline Mineralien usw.

Die Herstellung der erfindungsgemäßen Intumeszenzmassen erfolgt durch Mischen der Komponenten 1, 2 und 3 sowie gegebenenfalls 4 und den wasserabspaltenden Füllstoffen sowie den sonstigen Zusatzstoffen in üblichen Mischaggregaten bei Raumtemperaturen. Die Mischungen können beispielsweise als streichfähige, rollfähige, gießfähige oder sprühbare Beschichtungen, als Kitte, Putze oder Mörtel oder nach Formgebung zur Herstellung von Formteilen eingesetzt werden. Je nach Art des 1,2-Polyepoxids und der Menge an Füll- und Zusatzstoffen können lagerstabile Mischungen erhalten werden. Zur Herstellung von Formteilen kann die Intumeszenzmischung nach Formgebung bei Raumtemperatur oder erhöhter Temperatur bis ca. 100 °C ausgehärtet werden. Die Intumeszenzwirkung an diesen Formteilen läßt sich durch Erhitzen auf Temperaturen von ca. 300 bis 600 °C und höher zeigen.

Die mit erfindungsgemäßen Intumeszenzmassen hergestellten Beschichtungen und Konstruktionselemente können ausschließlich aus den vorbeschriebenen Intumeszenzwerkstoffen bestehen, vorzugsweise können sie auch Werkstoffkombinationen darstellen und/oder sonstige Montage- oder Beschichtungshilfs- und Zusatzmittel zu Zwecken der speziellen Einsatzgebieten angepaßten Verarbeitbarkeit, z.B. Verstärkungselemente oder/und Trägersubstrate enthalten.

Bei der Herstellung von solchen Konstruktionselementen kann kontinuierlich oder diskontinuierlich gearbeitet werden.

Die Herstellung kann durch Vermischen der Komponenten bzw. bereits vorgemischter Komponentengemische vor Ort geschehen, wobei die Reaktionsmischung maschinell oder per Hand, z.B. in zu verschließende Öffnungen bzw. beheizte oder unbeheizte Formen drucklos oder unter Druck eingegossen wird, wo sie dann aufschäumen bzw. aushärten kann. Die Mischung kann bei entsprechender technischer Ausrüstung auf die zu schützenden Substrate und Untergründe aufgesprüht, aufgestrichen oder aufgegossen werden. Es ist auch in Betracht zu ziehen, daß man zunächst Halbzeuge, z.B. Platten, Schaumstoffe, Profile oder Beschichtungen herstellt und diese dann in technich erforderlicher Weise weiterverarbeitet, z.B. durch Schneiden, Verpressen, Stanzen durch Warmverformen bei ca.c 110-250 °C, Verschweißen, Beschichten und Verkleben.

Durch Kombination der erfindungsgemäßen füllstoffhaltigen Intumeszenzwerkstoffe mit geschäumten oder massiven anorganischen oder organischen Zuschlagstoffen, z.B. Polystyrolschaum, Polyurethanschaum, Phenoplasten, Aminoplasten oder Kies oder Blähton, Harnstoff- oder Phenolharzschäumen, Schaumglas, Glasfasern, Holz, Mineralwolle, Bims usw. können als Konstruktionselemente auch Verbunde mit speziellen Intumeszenzeigenschaften erhalten werden.

Die Herstellung von mit Fasern oder Drähten, bzw. Geweben, Strängen oder Vliesen aus organischen oder anorganischen Materialien verstärkten Konstruktionselementen oder ihre Verwendung als Bestandteile in Mehrschicht- bzw.

Sandwichaufbauten sind ebenfalls in Betracht zu ziehen, z.B. die Herstellung von mit den erfindungsgemäßen Intumeszenzmassen beschichteten Gittern, die sich bei Beflammung verschließen; ebenso die Kombination mit anderen Intumeszenzmaterialien auf organischer oder anorganischer Basis.

Die erfindungsgemäßen Konstruktionselemente zeichnen sich dadurch aus, daß sie ihre Intumeszenzeigenschaften auch bei Einwirkung von fließendem Wasser nicht verlieren. Im allgemeinen beginnen sie bei Temperaturen oberhalb von 200 °C, insbesondere oberhalb 300 °C, aufzuschäumen. In der Flamme expandieren sie um ca. 50 bis über 300 Vol.-%, je nach Zusammensetzung, Korngrößenauswahl der Füllstoffe, und Art der Erhitzung. Sie sind vorzugsweise halogenfrei formulierbar und können oftmals schwer entflammbar eingestellt werden. Der bei Beflammung entstehende Intumeszenzschaum hat eine gute Beständigkeit gegen Flammenerosion.

Die mit erfindungsgemäßen Intumeszenzmassen hergestellten Konstruktionselemente finden insbesondere dort Verwendung, wo eine Maßnahme des vorbeugenden Brandschutzes durch Beschichtung, Verschalung, Abtrennung, Auskleidung, Ausfüllen oder Abdichten von Hohlräumen bzw. Bauteilen im Bereich des Hochhaus, Tiefbaus, der Elektrotechnik, des Fahrzeug-, Maschinen- oder Anlagenbaus vorgenommen werden soll und mit dem Auftreten von Schwitzwasser, Anmachwasser für Mörtel oder Zemente, Kondenswasser, Regenwasser oder Grundwasser zu rechnen ist.

Im folgenden soll die Erfindung beispielhaft erläutert werden: die angegebenen Teile sind Gewichtsteile bzw. Gewichtsprozente, soweit nicht anders vermerkt ist.

Charakterisierung der in den Beispielen verwendeten Ausgangsmaterialien:

Komponente 1:

1,2-Polyepoxid A: Hexahydrophthalsäurediglycidylester, Viskosität bei 20° C 600 mPas, Epoxidäquivalent 176

1,2-Polyepoxyid B: Mischung aus
70 % Bisphenol A-Diglycidyl-ether Epoxidäquivalent 190
30 % Bis-(N-epoxypropyl)-anilin Epoxidäquivalent 120
Die Mischung besitzt eine Viskosität von 1950 mPas (bei 20° C) und ein Epoxidäquivalent von 162

Komponente 2:

Pentaethylenhexamin, NH-Äquivalent: 35

Komponente 3:

| | |
|---|---|
| Phosphat P: | Getrocknetes und gemahlenes Neutralisationsprodukt aus Ethylendiamin und o-Phosphorsäure, Anteile über 0,2 mm Ø ausgesiebt. |
| Phospat M: | Gemisch aus gleichen Teilen handelsüblichen Melaminphosphat und Ammonpolyphosphat (Exolith 422, Hoechst AG), Anteile über 0,2 mm Ø ausgesiebt. |

Komponente 4:

Das eingesetzte Melamin ist getrocknete, pulverige Handelsware.

Beispielhaft werden folgende wasserabspaltende Füllstoffe verwendet

Aluminiumhydroxydfüllstoffe der im folgenden tabellarisch aufgeführten Korngrößen und sonstigen Eigenschaften

(Apyral® B-Typen der Bayer AG)

Füllstoff F 2 - F 120

| Apyral® B | 120 | 90 | 60 | 40 | 25 | 15 | 8 | 2 |
|---|---|---|---|---|---|---|---|---|
| $Al(OH)_3$ (%) | 98,7 | 98,7 | 98,7 | 98,7 | 99,5 | 99,5 | 99,5 | 99,3 |
| $SiO_2$ (%) | 0,2 | 0,2 | 0,2 | 0,2 | 0,2 | 0,2 | 0,2 | 0,2 |
| $Fe_2O_3$ | 0,04 | 0,04 | 0,04 | 0,03 | 0,03 | 0,03 | 0,03 | 0,02 |
| $Na_2O$ gesamt (%) | 0,5 | 0,5 | 0,5 | 0,5 | 0,3 | 0,3 | 0,3 | 0,3 |
| $Na_2O$ wasserlöslich (%) | 0,2 | 0,2 | 0,2 | 0,2 | 0,03 | 0,03 | 0,03 | 0,05 |
| Freie Feuchte (%) | 0,5 | 0,5 | 0,5 | 0,5 | 0,4 | 0,3 | 0,3 | 0,3 |
| Kornverteilung $D_{50}$ (µm) | 1,2-1,8 | 1,5-2,0 | 1,5-2,0 | 1,5-2,8 | 8 | 11 | 15 | 20-25 |
| BET-Oberfläche ($m^2/g$) | 10-12 | 8-21 | 4-8 | 2-4 | 2,2 | 1,5 | 0,8 | 0,2 |
| Schüttgewicht (g/l) | 250 | 250 | 250 | 450 | 600 | 650 | 700 | 950 |
| Bezeichnung F | 120 | 90 | 60 | 40 | 25 | 15 | 8 | 2 |

Alle Daten sind Richtwerte, die produktionsbedingten Schwankungen unterliegen.

$CaCO_3$ Füllstoff F 215 und F 240; Gipsfüllstoff F 315 und F 340

| | F 215 | 240 | 315 | 340 |
|---|---|---|---|---|
| Rückstand auf 200 µm-Sieb | 0,1 % | 1 % | 0,1 % | 1 % |
| oberer Schnitt (µm) | 125 | 200 | 120 | 220 |
| $D_{50}$, mittlerer Teilchendurchmesser | 15 | 25 | 13 | 28 |

Sonstige Zusätze

$Z_1$: Weichmacher Methylphosphonsäurediethylester
$Z_2$: Eisenoxid-Rotpigment (Bayferrox 140 M der Bayer AG)
$Z_3$: Silikathohlperlen (Fillite), Schüttgewicht ca. 300 g/l
Die Herstellung erfolgte, indem das Polyepoxid (Komponente 1) im Gemisch mit Füllstoffen (F-Typen) und sonstigen Zusätzen (Komponente 3, 4) bei 15 °C unter gutem Kneten mit dem Härter (Komponente 2) vermischt, in eine Plattenform mit 0,5 cm Dicke, die auf 40 °C vorgeheizt war, eingepreßt und dort zur Abreaktion gebracht wurde. Nach 100 - 200 Minuten wurde dann entformt.

Die hergestellten Intumeszenzwerkstoffe sind im folgenden rezepturmäßig in tabellarischer Form aufgeführt:

| Beispiel Nr. | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Intumeszenzmasse Nr. | 1 | 2 | 3 | 4 | 5 | 6 | 7 | 8 | 9 | 10 | 11 | 12 | 13 | 14 | 15 |
| Polyepoxid A Tle. | 500 | 500 | 500 | - | - | - | - | - | - | - | - | - | - | - | - |
| Polyepoxid B Tle. | - | - | - | 100 | 100 | 100 | 100 | 100 | 100 | 100 | 100 | 100 | 100 | 100 | 100 |
| Härter (Komp.2) Tle. | 100 | 100 | 100 | 35 | 35 | 35 | 35 | 35 | 35 | 35 | 35 | 35 | 35 | 35 | 35 |
| Phospht P Tle. | 250 | 250 | 250 | - | - | - | - | - | - | - | - | - | - | - | - |
| Phosphat M Tle. | - | - | - | 80 | 80 | 80 | 80 | 80 | 80 | 80 | 80 | 80 | 80 | 80 | 80 |
| Komponente 4 Tle. | 250 | 250 | 250 | - | - | - | - | - | - | - | - | - | - | - | - |
| 20 Tle. Füllstoff Typ F | 2 | 25 | 120 | 2 | 8 | 15 | 25 | 40 | 60 | 90 | 120 | 15 | 40 | 340 | 215 |
| Zusatz $Z_1$ | - | - | - | - | - | - | - | - | - | - | - | 10 | 10 | - | - |
| Zusatz $Z_2$ | 5,0 | 5,0 | 5,0 | 0,5 | 0,5 | 0,5 | 0,5 | 0,5 | 0,5 | 0,5 | 0,5 | 0,5 | 0,5 | 0,5 | 0,5 |
| Zusatz $Z_3$ | 600 | 600 | 600 | - | - | - | - | - | - | - | - | - | - | - | - |
| Schaumhöhe Test | 1 | 4 | 6 | 1 | 2 | 3 | 4 | 5-6 | 6 | 6 | 6 | 2 | 5 | 2 | 3 |
| Intumeszenz bei Beflammung | 1 | 2 | 6 | 1 | 1 | 1 | 3 | 6 | 6 | 6 | 6 | 1 | 6 | 2 | 2 |

Aus den hergestellten Intumeszenzplatten wurden Quadrate mit einer Kantenlänge von 1 cm geschnitten und in einem 600 °C vorgeheizten Umluftschrank gebracht. Nach 30 Min. wurden die Prüflinge dem Ofen entnommen und die Volumenzunahme festgestellt (Schaumhöhe). Die Intumeszenzeigenschaft wurde wie folgt beurteilt.

| Volumenzunahme in % | Intumeszenz 600° C |
|---|---|
| über ca. 200 | 1 |
| ca. 100 - 200 | 2 |
| ca. 50 - 100 | 3 |
| ca. 10 - 50 | 4 |
| ca. 5 - 10 | 5 |
| unter ca. 5 | 6 |

Die Beurteilung der Intumeszenzplatten 1-13 sind auf der Tabelle mit vermerkt. Desgleichen die Beurteilung der Intumeszenz an gleichartigen Würfeln mit Kantenlänge 0,5 cm, die auf einem Drahtnetz liegend von oben 3 Min. mit der entleuchteten Flamme eines Erdgas-Bunsenbrenners beaufsichtigt wurden.

Beide Tests zeigen den starken Abfall der Intumeszen mit zunehmender Feinkörnigkeit des anorganischen, wasserabspaltenden Füllstoffs sehr deutlich.

Beispiel 16

50 Tle. Polyepoxid (Komp. 1) B werden abgemischt mit 5 Tlen $TiO_2$-Weißpigment, 40 Tlen Phosphat (Komp. 3) M und 10 Tlen Füllstoff $F_2$, sowie 5 Tlen Füllstoff F 240.

110 Tle dieser Mischung werden ein einer Hochdruckmischvorrichtung mit 18 Tln Härter (Komp. 2) vermischt und über eine Sprühpistole auf ein 2 mm starkes Stahlblech aufgetragen. Der Auftrag wird wiederholt, so daß eine ca. 6 mm starke Beschichtung erfolgt. Aus dem Stahlblech wird dann nach dem Aushärten, das bei Raumtemperatur über Nacht erfolgt, eine 50 x 50 cm große Platte geschnitten und nach der Einheitstemperaturkurve in einer Kleinbrandkammer in Anlehnung an DIN 4102 beflammt. Die Beflammung erfolgt auf der beschichteten Seite.

Die Temperatur wird in der Formteilmitte auf dem Blech auf der feuerabgewandten Seite gemessen.

Nach 30 Minuten ist eine Innentemperatur der Brandkammer von ca. 900° C erreicht, die Blechplatte hat dann eine Temperatur von ca. 345° C. Nach 90 Minuten wird auf der feuerabgewandten Seite erst eine Temperatur von ca. 400° C gemessen.

Die gute Schutzwirkung der erfindungsgemäßen Beschichtung beruht z.T. auf dem gebildeten stabilen keramisiert wirkenden Intumeszenzschaum, der sich auf der Flammenseite ausgebildet und der Flammenerosion widerstanden hat.

**Ansprüche**

1. Massive oder poröse Intumeszenzmassen und damit hergestellte Konstruktionselemente, die bei Temperaturen über 100° C Wasser abspaltende Füllstoffe enthalten, erhalten durch Formgebung und Aushärtung von den bekannten Epoxidharzsystemen, die neben Phosphorsäurespendern und gegebenenfalls Cyanursäureabkömmlingen sonstige Füllstoffe und/oder Zusatzstoffe enthalten, dadurch gekennzeichnet, daß als wasserabspaltende Füllstoffe solche verwendet werden, die mittlere Korngrößen über 5 $\mu$m besitzen, vorzugsweise 8 - 50 $\mu$m, und BET-Oberflächen von weniger als 5 $m^2/g$ aufweisen.

2. Intumeszenzmassen gemäß Anspruch 1 enthaltend Al-hydroxid in Mengen von 5 bis 60 Gew.-%.

3. Intumeszenzmassen gemäß Anspruch 1, enthaltend zusätzlich Füllstoffe auf Carbonatbasis in Mengen von 5 bis 30 Gew.-%.

4. Verwendung der Intumeszenzmassen gemäß Ansprüchen 1 bis 3 zur Herstellung von Konstruktionselementen und Beschichtungen für den vorbeugenden Brandschutz.

## Claims

1. Solid or porous intumescent compositions and construction elements prepared therefrom, which contain fillers which eliminate water at temperatures above 100 °C and which are obtained by moulding and curing the known epoxy resin systems containing, in addition to phosphoric acid donors and, if appropriate, cyanuric acid derivatives, other fillers and/or additives, characterized in that the water-eliminating fillers which are used are those having average particle sizes of more than 5 µm, preferably 8 - 50 µm, and BET surface areas of less than 5 $m^2/g$.

2. Intumescent compositions according to Claim 1, which contain aluminium hydroxide in amounts of 5 to 60 % by weight.

3. Intumescent compositions according to Claim 1, which additionally contain fillers based on carbonate in amounts of 5 to 30 % by weight.

4. Use of the intumescent compositions according to Claims 1 to 3 for preparing construction elements and coatings for preventive fire protection.

## Revendications

1. Masses intumescentes massives ou poreuses et, partant éléments de construction fabriqués, qui contiennent des matières de charge libérant de l'eau à des températures supérieures à 100 °C, obtenues par façonnage et durcissement des systèmes connus de résines époxy, qui contiennent, outre des générateurs d'acide phosphorique et éventuellement des dérivés de l'acide cyanurique, d'autres matières de charge et/ou additifs, **caractérisées en ce que,** comme matières de charge libérant de l'eau, on utilise celles qui possèdent des granulométries moyennes supérieures à 5 µm, de préférence de 8 à 50 µm, et qui présentent des surfaces BET inférieures à 5 $m^2/g$.

2. Masses intumescentes selon la revendication 1, contenant de l'hydroxyde d'aluminium en quantités de 5 à 60% en poids.

3. Masses intumescentes selon la revendication 1 contenant, en outre, des matières de charge à base de carbonates en quantités de 5 à 30% en poids.

4. Utilisation des masses intumescentes selon les revendications 1 à 3 pour la préparation d'éléments de construction et d'enduction destinés à la protection préventive contre l'incendie.